# EUROPÄISCHE PATENTANMELDUNG

(11) **EP 1 705 242 A1**
(43) Veröffentlichungstag der Anmeldung: **27.09.2006**
(21) Anmeldenummer: 05006424.5
(22) Anmeldetag: 23.03.2005
(51) Int. Cl.: C12C 13/00, F24J 2/00, F24J 2/12, F25B 27/00

(54) **Brauereianlage und Brauverfahren**

(71) Anmelder: KRONES Aktiengesellschaft, 93073 Neutraubling (DE)
(72) Erfinder: Stippler, Kurt Dr. Ing., 85417 Marzling (DE); Wasmuht, Klaus Karl, 91792 Ellingen (DE)
(74) Vertreter: Grünecker, Kinkeldey, Stockmair & Schwanhäusser Anwaltssozietät

(57) **Zusammenfassung**

Die Erfindung betrifft eine Brauereianlage mit wenigstens einem Maischgefäß, einem Läuterbottich, einer Würzepfanne und einem Wasserhaus. Die Brauereianlage ist dadurch gekennzeichnet, dass mit Sonnenkollektoren zumindest ein Teil des Wärmeenergiebedarfs der Brauerei gedeckt wird, indem die Sonnenkollektoren direkt oder indirekt ein Fluid aufheizen. Die Erfindung betrifft weiterhin ein Brauverfahren, bei dem der Wärmeenergiebedarf zumindest eines Teils der Brauprozessschritte zumindest teilweise mit einem von Sonnenkollektoren direkt oder indirekt erhitzten Fluids gedeckt wird.

## Beschreibung

Die Erfindung betrifft eine Brauereianlage mit wenigstens einem Maischgefäß, einem Läuterbottich, einer Würzepfanne und einem Wasserhaus sowie ein Brauverfahren.

Bierbrauen ist ein Energie aufwendiges Verfahren, wobei sowohl elektrische Energie als auch Wärmeenergie benötigt wird. Insgesamt machen die Energiekosten einen beachtenswerten Anteil der Gesamtherstellungskosten von Bier aus. Tendenziell muss davon ausgegangen werden, dass der Anteil der Energiekosten mit der Verknappung fossiler Brennstoffe und den damit verbundenen höheren Energiepreisen noch zunehmen werden.

Um den Einfluss der Energiekosten auf die Herstellungskosten zu verringem, wurde in herkömmlichen Brauereianlagen versucht die Energierückgewinnung sowie den Gesamtwirkungsgrad der Anlage zu verbessem. So wird beispielsweise das Speisewasser durch Abkühlung von Rauchgasen in einem Economizer vorgewärmt oder erhitzter Dampf genutzt, der im Vergleich zu normalem Dampf transportabler ist und somit weniger Verluste entstehen. Um zusätzlich die Energieerzeugung ökonomischer zu machen, werden vermehrt Blockheizkraftwerke eingesetzt, die sowohl zur Erzeugung elektrischen Stroms als auch für die Heißwasser- bzw. Dampferzeugung benutzt werden. Da diese jedoch ebenso auf fossilen Brennstoffen basieren, sind auch sie nicht unabhängig von Preissteigerungen aufgrund der Verknappung fossiler Brennstoffe.

Es ist daher Aufgabe der vorliegenden Erfindung eine Brauereianlage sowie ein Brauverfahren bereitzustellen, die Brauereien vom Bedarf an fossilen Brennstoffen unabhängiger zu machen.

Diese Aufgabe wird mit der Brauereianlage des Anspruchs 1 sowie dem Brauverfahren nach Anspruch 7 gelöst.

Mit Hilfe von Sonnenkollektoren, die die Energie der Sonnenstrahlen in Wärmeenergie umwandeln, wird es ermöglicht, zumindest einen Teil des Warmeenergiebedarfs der Brauereianlage mit Hilfe von Energie zu decken, die nicht aus fossilen Brennstoffen stammt. Entscheidend für die Anwendung in einer Brauerei ist dabei, dass die Sonnenkollektoren so ausgelegt werden, dass das für den Brauprozess benötigte wärmste Fluid durch die Solarenergie auf eine Temperatur von mindestens 120° C, insbesondere auf eine Temperatur von 160° C bis 180° C aufgeheizt werden kann. Die Fluiderhitzung wird also nicht, wie sonst beim Einsatz von Sonnenkollektoren in der Bauwirtschaft üblich, auf die Erzeugung von Warmwasser von ca. 50°C bis 60°C beschränkt.

Je nach Bedarf der Brauereianlage kann weiterhin die Erhitzung des Fluids durch die Sonnenkollektoren direkt, d.h. das Fluid fließt durch die Sonnenkollektoren und wird dort erwärmt, oder indirekt, d.h. ein zweites Fluid wird im Sonnenkollektor erhitzt und über einen Wärmeaustauscher wird Wärmeenergie an das im Brauprozess benutzte Fluid weitergegeben, erfolgen.

Vorzugsweise kann die in den Sonnenkollektoren erzeugte Wärmeenergie in einem Wärmespeicher zwischengespeichert werden und über eine Steuereinheit gesteuert den Wärmeenergieverbrauchem, insbesondere dem Maischgefäß, dem Läuterbottich, der Würzepfanne, dem Wasserhaus, einer CIP-Anlage und/oder einem Flaschenkeller, insbesondere für die Flaschenreinigung, zugeführt werden. Somit lässt sich unabhängig vom Ablauf des Brauprozesses die Wärmeenergie durch die Sonnenkollektoren gewinnen und je nach Bedarf den einzelnen Wärmeenergieverbraucher in der Brauereianlage gesteuert zuführen. Die Steuerung oder Regelung betrifft dabei die Temperatur des Fluids und/oder den Volumenstrom, wobei sich die zugeführte Wärmeenergiemenge aus diesen Parametem ergibt.

Gemäß einer bevorzugten Ausführungsform kann die Brauerei zur Kälteversorgung eine sorptive Kälteanlage aufweisen, deren Wärmeenergiebedarf zumindest teilweise über die von den Sonnenkollektoren erzeugte Wärmeenergie gedeckt wird. Herkömmlicherweise werden in Brauereien Kompressionskühlanlagen benutzt, die jedoch die gleichen Nachteile wie die herkömmlichen Wärmeerzeuger aufweisen. Die Nutzung einer sorptiven Kälteanlage bringt dagegen den Vorteil, dass die von den Sonnenkollektoren erzeugte Wärmeenergie eben auch für die Erzeugung der benötigten Kälte herangezogen werden kann.

Vorzugsweise kann als Fluid Wasser unter erhöhtem Druck (Hochdruckwasser) benutzt werden. Durch die Erhöhung der Siedetemperatur kann man mit dem Hochdruckwasser in der flüssigen Phase die benötigten hohen Temperaturen von mindestens 120°C, insbesondere von Temperaturen in einem Bereich von 160 bis 180°C, erzielen.

In einer bevorzugten Ausführungsform können die Sonnenkollektoren parabole Rinnenkollektoren aufweisen. Durch die Fokussierung der Sonnenstrahlen mit Hilfe eines parabolförmigen Spiegels auf die Leitungen, in denen ein aufzuheizendes Fluid fließt, auf relativ hohe Temperaturen, insbesondere Temperaturen von bis zu 400°C aufgeheizt werden. Somit lässt sich Aufheizung auf 120° C, insbesondere auf 160 bis 180° C für das im Brauverfahren benutzte Fluid, auch in Breitengraden realisieren, die im Vergleich zu südlichen Ländem weniger Sonneneinstrahlung aufweisen.

Bevorzugt kann beim indirekten Aufheizen des Fluids in den Sonnenkollektoren zur Aufnahme der Wärmeenergie ein Thermoöl, eine Salzschmelze oder Dampf dienen. Mit diesen Werkstoffen lassen sich hohe Wirkungsgrade (besser als 14%) erzielen.

Die Erfindung betrifft auch ein Brauverfahren, das dadurch gekennzeichnet ist, dass der Wärmeenergiebedarf zumindest eines Teils der Brauprozessschritte, insbesondere beim Maischen, Lautern und/oder Würzekochen, zumindest teilweise mit einem von Sonnenkollektoren auf eine Temperatur von mindestens 120° C, insbesondere auf eine Temperatur in einem Bereich von 160° C bis 180° C, direkt oder indirekt ertiitzten Fluids gedeckt werden. Durch den Einsatz von Wärmeenergie aus den Sonnenstrahlen kann somit die Abhängigkeit von herkömmlichen Wärmeenergieerzeugem reduziert werden. Um das Verfahren wirtschaftlicher als bei der herkömmlichen Energiegewinnung zu machen ist es besonders wichtig, dass das Fluid bis auf die im Prozess benutzten höchsten Temperaturen aufgeheizt werden kann. Dabei kann das Fluid sowohl direkt als auch indirekt aufgeheizt werden.

Gemäß einer bevorzugten Ausführungsform kann der Wärmeenergiebedarf beim Flaschenreinigen zumindest teilweise mit einem von Sonnenkollektoren auf eine Temperatur von mindestens 120° C, insbesondere auf eine Temperatur in einem Bereich von 160° C bis 180° C, direkt oder indirekt erhitzten Fluids gedeckt werden. Der vorteilhafte Einsatz der Solarenergie ist somit nicht nur auf den eigentlichen Brauprozess beschränkt, sondern kann bei der gesamten Bierherstellung benutzt werden. Im Flaschenkeller ist dabei insbesondere der Energiebedarf bei der Flaschenreinigung hoch, so dass der Einsatz von Sonnenenergie vorteilhaft ist.

Vorzugsweise kann der Wärmeenergiebedarf einer sorptiven Kälteanlage bei der Herstellung von Eiswasser für das Brauverfahren zumindest teilweise mit einem von Sonnenkollektoren auf eine Temperatur von mindestens 120° C, insbesondere auf eine Temperatur in einem Bereich von 160° C bis 180° C, direkt oder indirekt erhitzten Fluids gedeckt werden. Der vorteilhafte Einsatz der Solarenergie ist also nicht nur auf den eigentlichen Wärmeenergiebedarf im Brauprozess beschränkt, sondern kann auch bei der Herstellung des im Prozess benötigten Eiswassers genutzt werden, um die Abhängigkeit von herkömmlichen Energieträgem zu verringern.

Ein Ausführungsbeispiel der Erfindung ist in der Zeichnung dargestellt und wird nachstehend im Detail erläutert. Es zeigt:

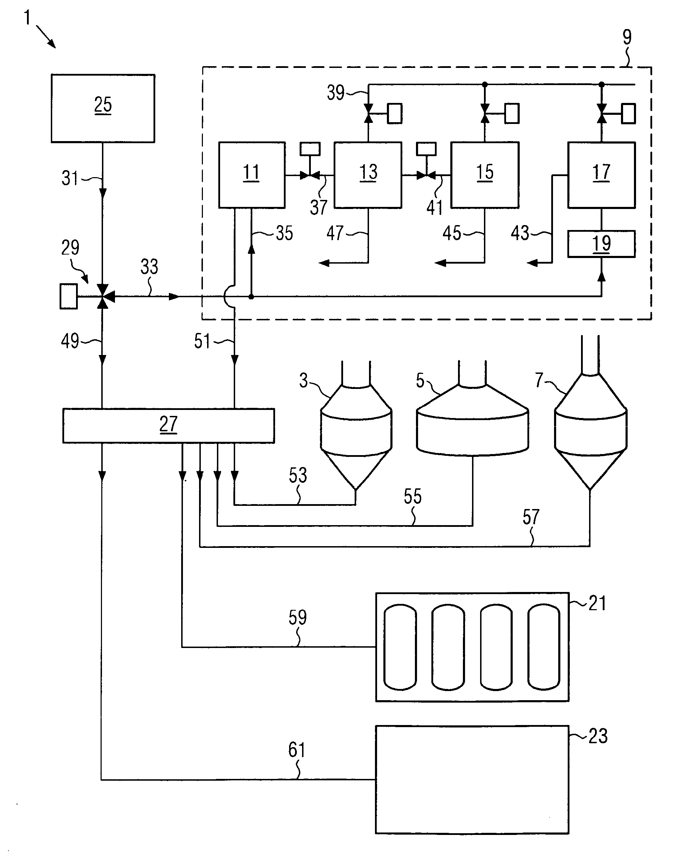

- Figur 1: schematisch eine Brauereianlage gemäß der vorliegenden Erfindung.

Figur 1 zeigt eine Brauereianlage 1 mit einem Maischgefäß 3, einem Läuterbottich 5 einer Würzepfanne 7 und einem Wasserhaus 9. Das Wasserhaus 9 umfasst mehrere Wärmespeicher: einen Hochdruckheißwasserspeicher 11, geeignet für Fluidtemperaturen von mindestens 120° C, insbesondere von 160° bis 180° C, einen Warmwasserspeicher 13, einen Kaltwasserspeicher 15 und einen Eiswasserspeicher 17. Zur Erzeugung des Eiswassers dient eine sorptive Kälteanlage 19. Zusätzlich weist die Brauereianlage 1 auch eine CIP (Cleaning in Proces)-Anlage 21 auf. Diese Anlage dient der Reinigung und Desinfektion der anderen Elemente der Brauereianlage 1. Darüber hinaus ist schematisch auch ein Flaschenkeller 23 dargestellt. Dort stehen die Füllanlagen sowie die Flaschenreinigungsanlagen der Brauerei. Schließlich sind in Figur 1 Sonnenkollektoren 25 dargestellt. Diese dienen dazu, zumindest einen Teil des Wärmeenergiebedarfs der Brauerei 1 zu decken. Die Sonnenkollektoren 25 sind dabei so ausgelegt, dass ein Fluid mit Hilfe der Sonnenkollektoren 25 direkt oder indirekt auf mindestens 120° C, insbesondere bis auf 160° bis 180° C aufgeheizt wird.

Bei der direkten Methode wird das Fluid direkt im Sonnenkollektor 25 von den Sonnenstrahlen aufgeheizt, während bei der indirekten Methode ein zweites Fluid aufgeheizt wird, dessen Energie über einen Wärmeaustauscher (nicht gezeigt) auf das erste Fluid, das im Brauprozess weiter benutzt wird, übertragen wird.

Als für die Verwendung in einer Brauerei vorteilhaft haben sich insbesondere Parabolrinnenkollektoren erwiesen. Bei diesen Sonnenkollektoren 25 wird das Sonnenlicht durch parabolförmige Spiegel auf eine Röhre fokussiert, in der das aufzuheizende Fluid zirkuliert. In der indirekten Ausführungsform kann dabei beispielsweise ein Thermoöl, eine Salzschmelze oder Dampf benutzt werden, wobei Temperaturen von bis zu 400° erzielt werden. Bei der direkten Methode eignet sich unter Hochdruck stehendes Wasser, um die gewünschten Temperaturen von mindestens 120° C, insbesondere von 160°C bis 180° C, in der Flüssigphase zu erzielen.

Die Brauereianlage 1 weist weiterhin eine Steuer- und Regelungseinheit 27 auf, die dazu dient, das erhitzte Fluid an die verschiedenen Wärmeenergieverbraucher gesteuert bzw. geregelt weiterzuleiten. Dabei ist die Anlage 1 so ausgelegt, dass die Steuereinheit 27 den erhitzten Fluidstrom entweder direkt von den Sonnenkollektoren 25 oder aber über den Hochdruckheißwasserspeicher 11 bezieht. Zum Umschalten zwischen den beiden Strömen dient beispielsweise ein Umschaltventil 29.

In der in Figur 1 dargestellten Brauereianlage 1 sind nur die Elemente dargestellt, die einen hohen Wärmeenergiebedarf aufweisen. Auf die Darstellung weiterer Elemente, wie Gär- und Lagerkeller, Filterkeller etc. wurde verzichtet.

Die erfindungsgemäße Funktionsweise der Wärmeenergieversorgung der Brauereianlage 1 wird nun im Detail beschrieben. Das von den Sonnenkollektoren 25 direkt oder indirekt aufgeheizte Fluid mit einer Temperatur von mindestens 120° C, insbesondere von 160°C bis 180° C, fließt über die Leitungen 31, 33 und 35 in den Hochdruckheißwasserspeicher 11. Dort kann die von den Sonnenkollektoren 25 erzeugte Wärmeenergie zwischengespeichert werden und je nach Bedarf abgerufen werden. Wird der Wärmeenergiebedarf nicht vollständig von den Sonnenkollektoren 25 gedeckt, so kann die fehlende Wärmemenge durch herkömmliche Verfahren erzeugt und dem Speicher zugeführt werden.

Über die Leitung 37 ist der Heißwasserspeicher 11 mit dem Warmwasserspeicher 13 verbunden. Somit kann durch Vermischen von kaltem Wasser aus dem Kaltwasservorlauf 39 mit dem Hochdruckheißwasser 37 das benötigte Warmwasser von üblicherweise ca. 80° C erzeugt werden. Ebenso kann über die Leitung 41 und den Kaltwasservorlauf 39 das Wasser im Kaltwasserspeicher 15 auf die gewünschte Temperatur von üblicherweise 15°C gebracht werden. Im Wasserhaus 9 wird darüber hinaus Eiswasser, typischerweise von einer Temperatur von 2° C, im Eiswasserspeicher 17 zubereitet. Dazu wird erfindungsgemäß eine sorptive Kälteanlage 19 benutzt, die die von ihr benötigte Wärmeenergie entweder aus dem Hochdruckheißwasserspeicher 11 oder direkt von den Sonnenkollektoren 25 erhält. Von den verschiedenen Wasserspeichem gehen die Leitungen 43, 45 und 47 über die Steuereinheit 27 zu den jeweiligen Verbrauchern.

Je nach Einstellung des Umschaltventils 29 wird der Steuer- und Regelungseinheit 27 das erhitzte Fluid direkt über die Leitung 49 oder aber vom Hochdruckheißwasserspeicher 11 über die Leitung 51 zugeführt. Die Steuer- und Regeleinheit 27 verteilt dann die im Hochdruckheißwasser gespeicherte Wärmeenergie je nach Bedarf an die Wärmeenergieverbraucher der Brauereianlage 1. Evtl. kann dabei durch Mischen mit Wasser aus den anderen Speichern 13, 15 und 17 für jedes Element der Brauereianlage 1 individuell die benötigte Wärmeenergiemenge über den Volumenstrom und/oder die Fluidtemperatur zugeführt werden.

So wird das Maischgefäß 3 über die Zuleitung 53, der Läuterbottich 5 über die Zuleitung 55 und die Würzepfanne 7 über die Zuleitung 57 mit der benötigten Wärmeenergie versorgt. Ebenso wird die CIP-Anlage 21 über die Leitung 59 mit Wärmeenergie versorgt. Der Flaschenkeller 23, insbesondere mit der Flaschenreinigungsanlage (nicht gezeigt) wird über die Leitung 61 versorgt. Der besseren Übersicht halber wurden die benötigten Fluidrückläufe in der Figur 1 nicht dargestellt.

Selbstverständlich können auch noch weitere Elemente, wie beispielsweise die Gebäudeheizung, bei Bedarf mit Wärmeenergie aus den Sonnenkollektoren 25 versorgt werden. Weiterhin ist denkbar, dass anstatt oder zusätzlich zum Hochdruckheißwasser auch ein Dampferzeuger benutzt wird, um zumindest Teile der Brauereianlage 1 über Dampf, insbesondere überhitzten Dampf, mit Wärmeenergie zu versorgen. Weiterhin ist denkbar, dass zusätzlich zur Aufheizung eines Fluids zur Wärmeenergieversorgung auch Photovoltaikelemente zur Stromversorgung der Brauereianlage 1 benutzt werden.

Die Solaranlage 25 ist dabei vorteilhafterweise auf dem Dach der Brauereianlage 1 oder an deren Wänden befestigt, da dann keine zusätzliche Fläche für die Solaranlage 25 der Brauereianlage 1 benötigt wird.

## Patentansprüche

1. Brauereianlage mit wenigstens einem Maischgefäß (3), einem Läuterbottich (5), einer Würzepfanne (7) und einem Wasserhaus (9) **dadurch gekennzeichnet, dass** mit Sonnenkollektoren (25) zumindest ein Teil des Wärmeenergiebedarfs der Brauerei gedeckt wird, indem die Sonnekollektoren direkt oder indirekt ein Fluid auf eine Temperatur von mindestens 120°C, insbesondere auf eine Temperatur von 160° bis 180°C, aufheizen.

2. Brauereianlage nach Anspruch 1, **dadurch gekennzeichnet, dass** die in den Sonnenkollektoren (25) erzeugte Wärmeenergie in einem Wärmespeicher zwischenspeicherbar ist und über eine Steuereinheit (27) gesteuert den Wärmeenergieverbrauchem, insbesondere dem Maischgefäß (3), dem Läuterbottich (5), der Würzpfanne (7), dem Wasserhaus (9), einer CIP-Anlage (21) und/oder einem Flaschenkeller (23), insbesondere für die Flaschenreinigung, zugeführt wird.

3. Brauereianlage nach Anspruch 1 oder 2, **dadurch gekennzeichnet, dass** zur Kälteversorgung eine sorptive Kälteanlage (19) vorgesehen ist, deren Wärmeenergiebedarf zumindest teilweise über die von den Sonnenkollektoren (25) erzeugte Wärmeenergie gedeckt ist.

4. Brauereianlage nach einem der Ansprüche 1 bis 3, **dadurch gekennzeichnet, dass** das Fluid Wasser unter erhöhtem Druck ist.

5. Brauereianlage nach einem der Ansprüche 1 bis 4, **dadurch gekennzeichnet, dass** die Sonnenkollektoren (25) Parabolrinnen-Kollektoren aufweisen.

6. Brauereianlage nach einem der Ansprüche 1 bis 5, **dadurch gekennzeichnet, dass** beim indirekten Aufheizen des Fluids in den Sonnenkollektoren (25) zur Aufnahme der Wärmeenergie ein Thermoöl, eine Salzschmelze oder Dampf dient.

7. Brauverfahren **dadurch gekennzeichnet, dass** der Wärmeenergiebedarf zumindest eines Teils der Brauprozessschritte, insbesondere beim Maischen, Läutem und/oder Würze kochen, zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

8. Brauverfahren nach Anspruch 7, **dadurch gekennzeichnet, dass** der Wärmeenergiebedarf beim Flaschenreinigen zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

9. Brauverfahren nach Anspruch 7 oder 8, **dadurch gekennzeichnet, dass** der Wärmeenergiebedarf einer sorptiven Kälteanlage (19) bei der Herstellung von Eiswasser zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

## Geänderte Patentansprüche

### Geänderte Patentansprüche gemäss Regel 86(2) EPÜ.

**1.** Brauereianlage mit wenigstens einem Maischgefäß (3), einem Läuterbottich (5), einer Würzepfanne (7) und einem Wasserhaus (9), wobei mit Sonnenkollektoren (25) zumindest ein Teil des Wärmeenergiebedarfs der Brauerei gedeckt wird, indem die Sonnekollektoren direkt oder indirekt ein Fluid auf eine Temperatur von mindestens 120°C, insbesondere auf eine Temperatur von 160° bis 180°C, aufheizen,
**dadurch gekennzeichnet, dass** die in den Sonnenkollektoren (25) erzeugte Wärmeenergie in einem Wärmespeicher zwischenspeicherbar ist und über eine Steuereinheit (27) gesteuert den Wärmeenergieverbrauchem, insbesondere dem Maischgefäß (3), dem Läuterbottich (5), der Würzpfanne (7), dem Wasserhaus (9), einer CIP-Anlage (21) und/oder einem Flaschenkeller (23), insbesondere für die Flaschenreinigung, zugeführt wird.

**2.** Brauereianlage nach Anspruch 1, **dadurch gekennzeichnet, dass** zur Kälteversorgung eine sorptive Kälteanlage (19) vorgesehen ist, deren Wärmeenergiebedarf zumindest teilweise über die von den Sonnenkollektoren (25) erzeugte Wärmeenergie gedeckt ist.

**3.** Brauereianlage nach einem der Ansprüche 1 oder 2, **dadurch gekennzeichnet, dass** das Fluid Wasser unter erhöhtem Druck ist.

**4.** Brauereianlage nach einem der Ansprüche 1 bis 3, **dadurch gekennzeichnet, dass** die Sonnenkollektoren (25) Parabolrinnen-Kollektoren aufweisen.

**5.** Brauereianlage nach einem der Ansprüche 1 bis 4, **dadurch gekennzeichnet, dass** beim indirekten Aufheizen des Fluids in den Sonnenkollektoren (25) zur Aufnahme der Wärmeenergie ein Thermoöl, eine Salzschmelze oder Dampf dient.

**6.** Brauverfahren **dadurch gekennzeichnet, dass** der Wärmeenergiebedarf beim Maischen, Läutern und Würze kochen, zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

**7.** Brauverfahren nach Anspruch 6, **dadurch gekennzeichnet, dass** der Wärmeenergiebedarf beim Flaschenreinigen zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

**8.** Brauverfahren nach Anspruch 6 oder 7, **dadurch gekennzeichnet, dass** der Wärmeenergiebedarf einer sorptiven Kälteanlage (19) bei der Herstellung von Eiswasser zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.
